# EUROPÄISCHE PATENTANMELDUNG

(11) **EP 1 779 716 A2**
(43) Veröffentlichungstag der Anmeldung: **02.05.2007**
(21) Anmeldenummer: 06021205.7
(22) Anmeldetag: 10.10.2006
(51) Int. Cl.: A01D 57/20

(54) **Mähmaschine mit einem Mähwerk und einer Querfördervorrichtung**

(30) Priorität: 26.10.2005 DE 102005051543
(71) Anmelder: CLAAS Saulgau GmbH, 88348 Bad Saulgau (DE)
(72) Erfinder: Loebe, Stefan, 88348 Bad Saulgau (DE)
(74) Vertreter: Eisele, Otten, Roth & Dobler

(57) **Zusammenfassung**

Es wird eine Mähmaschine mit wenigstens einem Mähwerk (1, 2) mit einem quer zur Fahrtrichtung (F) ausgebildeten Mähbereich (7), wobei wenigstens eine Querfördervorrichtung (3, 4) zum wenigstens teilweise quer zur Fahrtrichtung (F) gerichteten Fördern von abgemähtem Mähgut vorgesehen ist und wobei die Querfördervorrichtung (3, 4) einen Aufnahmebereich (6) zum Aufnehmen von abgemähtem Mähgut aufweist, vorgeschlagen, die flexibler handhabbar ist und/oder neue Anwendungsmöglichkeiten eröffnet. Dies wird erfindungsgemäß dadurch erreicht, dass der Aufnahmebereich (6) der Querfördervorrichtung (4) wenigstens teilweise quer zur Fahrtrichtung (F) betrachtet, seitlich neben dem Mähbereich (7) des Mähwerks (2) angeordnet ist.

## Beschreibung

Die Erfindung betrifft eine Mähmaschine nach dem Oberbegriff des Anspruchs 1.

Mit den Druckschriften GB 2 088 684, AT 28 383 und EP 1 155 609 sind Mähmaschinen bekannt geworden, die jeweils ein Mähwerk sowie eine Querfördervorrichtung umfassen. Die Querfördervorrichtungen der zuvor genannten drei Druckschriften sind in unterschiedlichster Art und Weise ausgebildet. Beispielsweise zeigt die britische Druckschrift eine horizontal rotierende Spirale, die österreichische Druckschrift ein um eine Vertikalachse rotierender Kreisel, insbesondere in Glockenform, und die europäische Druckschrift zeigt ein Querförderband. Mit Hilfe derartiger Querfördervorrichtungen wird abgemähtes Mähgut quer zur Fahrtrichtung befördert und insbesondere als Schwad abgelegt.

Diese Mähmaschinen sind über eine Zugdeichsel oder dergleichen an einem Zugfahrzeug ankuppelbar und verfügen über ein eigenes Fahrwerk. Das Fahrwerk trägt und führt das Mähwerk einschließlich der Querfördervorrichtung bzw. der Schwadeinheit sowohl in der Arbeits- als auch in der Transportstellung.

Weiterhin sind Mähmaschinen zum Anbau an Traktoren bekannt geworden, die über hydraulische Hubeinrichtungen des Basisfahrzeugs von der Arbeitsstellung in die Transportstellung und umgekehrt verfahrbar sind. Diese Mähmaschinen werden sowohl in der Transport- als auch in der Arbeitsstellung über das Fahrwerk der Basismaschine getragen und geführt.

Darüber hinaus sind Mähmaschinen als Selbstfahrer im Handel erhältlich, bei denen ebenfalls über entsprechende Hub- und Verstelleinheiten die Mähwerke von der Transport- in die Arbeitsstellung verfahrbar sind. Auch hier trägt und führt das Fahrwerk des Basisfahrzeugs das bzw. die Mähwerke sowohl in der Arbeits- als auch in der Transportstellung. Beispielsweise wird unter dem Produktnamen "Cougar" des Landmaschinenherstellers Claas eine selbstfahrende Mähmaschine angeboten, bei der mehrerer (Seiten-)Mähwerke vorgesehen sind.

Bei derartigen Mähmaschinen, sowohl in Form der Anbaumaschine als auch bei einem Selbstfahrer, sind bislang keine den Mähwerken nachgeschaltete Querfördereinheiten vorgesehen. Diese können insbesondere aus Gewichtsgründen nicht ohne Weiteres an die Mähwerke angebaut werden, da die Gefahr gegeben ist, dass die zulässigen Transportgewichte für die einzelnen Fahrwerksachsen des Basisfahrzeugs überschritten werden.

Bei Mähmaschinen gemäß dem Stand der Technik ist somit eine Querfördervorrichtung unmittelbar hinter dem Mähwerk angeordnet.

Aufgabe der Erfindung ist es, eine Mähmaschine mit wenigstens einem Mähwerk mit einem quer zur Fahrtrichtung ausgebildeten Mähbereich, wobei wenigstens eine Querfördervorrichtung zum wenigstens teilweise quer zur Fahrrichtung gerichteten Fördern von abgemähtem Mähgut vorgesehen ist und wobei die Querfördervorrichtung einen Aufnahmebereich zum Aufnehmen von abgemähtem Mähgut aufweist, vorzuschlagen, die flexibler handhabbar ist und/oder neue Anwendungsmöglichkeiten eröffnet.

Diese Aufgabe wird, ausgehend von einer Mähmaschine der einleitend genannten Art, durch die kennzeichnenden Merkmale des Anspruchs 1 gelöst. Durch die in den Unteransprüchen genannten Maßnahmen sind vorteilhafte Ausführungen und Weiterbildungen möglich.

Dementsprechend zeichnet sich eine erfindungsgemäße Mähmaschine dadurch aus, dass der Aufnahmebereich der Querfördervorrichtung wenigstens teilweise quer zur Fahrtrichtung betrachtet, neben dem Mähbereich des Mähwerks angeordnet ist. Mit dieser Maßnahme ist es z.B. möglich, eine Entkopplung des Mähwerks von der Querfördervorrichtung vorzusehen. Beispielsweise können zwei separate Einheiten verwendet werden, wobei der Aufnahmebereich der Querfördervorrichtung in Fahrtrichtung betrachtet neben dem Mähbereich des Mähwerks angeordnet ist. Hierdurch kann insbesondere bereits auf dem Feld abgelegtes, abgemähtes Mähgut quer zur Fahrtrichtung, beispielsweise in und/oder über dem Mähbereich des Mähwerks hinaus befördert werden.

Gemäß der Erfindung kann ein völlig neuartiges Management des abgemähten Mähguts erfolgen. Denkbar ist z.B., dass ein Traktor mit handelsüblichem Frontmähwerk ohne Querfördervorrichtung und mit heckseitig angeordneter Querfördervorrichtung ausgestattet ist, wobei der Aufnahmebereich seitlich neben dem Mähbereich des Mähwerks angeordnet ist. Hierdurch wird es möglich, dass beispielsweise das abgemähte Mähgut einer ersten Fahrt auf dem Feld bei einer zweiten Fahrt über das Feld von der Querfördervorrichtung aufgenommen und in den Mähbereich des Mähwerks der zweiten Fahrt befördert wird. Hierdurch wird eine Addition bzw. Zusammenlegung des abgemähten Mähguts der ersten und der zweiten Fahrt verwirklicht. Ein derartiges, erfindungsgemäßes Mähgutmanagement steht im krassen Gegensatz zum bisherigen Stand der Technik, bei dem der Aufnahmebereich der Querförderung vollständig im Mähbereich des Mähwerks angeordnet wurde. Ein erfindungsgemäßes seitliches Anordnen des Aufnahmebereichs neben dem Mähwerk war als nicht nötig angesehen.

Zudem erfolgte beim eingangs aufgeführten Stand der Technik neben einer gerätetechnischen, auch eine verfahrenstechnische Kopplung des Mähwerks mit der Querförderung. Dagegen kann bei einer erfindungsgemäßen Mähmaschine neben einer verfahrenstechnischen Entkopplung des Mähens und des Querförderns durch die Entkopplung der beiden Geräte in vorteilhafter Weise z.B. eine Verteilung der Gewichte auf unterschiedlichste Fahrwerke realisiert werden. So kann eine Überschreitung entsprechender zulässiger Transportgewichte für Fahrwerke wirkungsvoll verhindert werden.

In einer vorteilhaften Variante der Erfindung ist die Querfördervorrichtung in Arbeitsstellung wenigstens teilweise hinter dem Mähbereich des Mähwerks angeordnet. Hierdurch kann eine besonders kompakte Einheit realisiert werden und/oder eine Querförderung des abgemähten Mähguts sich auch wenigstens teilweise über den Mähbereich des Mähwerks erstrecken. Gegebenenfalls auch darüber hinaus.

Vorteilhafterweise kann abgemähtes Mähgut des Bereichs neben dem Mähbereich des Mähwerks entweder separat zum abgemähten Mähgut des Mähwerks transportiert bzw. befördert werden oder es kann auch eine Zusammenführung von abgemähtem Mähgut des Mähwerks und von abgemähtem Mähgut des Bereichs neben dem Mähwerk verwirklicht werden.

Vorzugsweise ist die Querfördervorrichtung in Arbeitsstellung wenigstens teilweise hinter und quer zur Fahrtrichtung betrachtet seitlich neben dem Mähbereich des Mähwerks angeordnet. Hierdurch kann beispielsweise mittels einer einzigen Querfördervorrichtung sowohl Mähgut des Mähbereichs als auch Mähgut des seitlich neben dem Mähbereich des Mähwerks vorhandenen Mähguts befördert werden. Mit dieser Maßnahme wird der konstruktive als auch der verfahrenstechnische Aufwand ganz besonders stark reduziert.

In einer bevorzugten Weiterbildung der Erfindung sind wenigstens zwei Querfördervorrichtungen vorgesehen, wobei eine erste Querfördervorrichtung hinter dem Mähbereich des Mähwerks und eine zweite Querfördervorrichtung quer zur Fahrtrichtung betrachtet, seitlich neben dem Mähbereich des Mähwerks angeordnet ist. Vorteil von separaten Querfördervorrichtungen ist beispielsweise, dass diese aus der Arbeitsstellung in die Transportstellung in besonderen Ausführungsformen der Erfindung separat verstellt bzw. gehändelt und insbesondere an unterschiedlichsten Orten bzw. Positionen in Transportstellung abgelegt bzw. angeordnet werden können. Hierdurch wird eine weitere Flexibilisierung bzw. Entkopplung der verwendeten Einzelkomponenten verwirklichbar. Dies ist insbesondere bei beengten Platzverhältnissen, wie dies beispielsweise bei Selbstfahrern mit mehreren Mähwerken auftreten könnte, von besonderem Vorteil.

Darüber hinaus können die zwei separaten, d.h. die erste und die zweite Querfördervorrichtung derart ausgebildet werden, dass diese eine vorteilhafte Zusammenführung bzw. Addition der jeweiligen Mähgutströme verwirklichen. Beispielweise fördern die beiden Querfördervorrichtungen in die gleiche Richtung und führen zu einem gemeinsamen, abgelegten Schwad.

Vorteilhafterweise umfasst die oder eine der wenigstens zwei Fördervorrichtungen wenigstens eine Bandfördereinheit mit einem Förderband, Förderkette oder dergleichen. Ein Förderband oder dergleichen kann einerseits besonders kompakt ausgebildet und/oder mit hoher Querfördergeschwindigkeit betrieben werden. Beispielsweise kann auch ein elastisches, insbesondere dehnbares Förderband verwendet werden, wobei z.B. das Förderband sich einerseits über den Aufnahmebereich gemäß der Erfindung und/oder andererseits über den Mähbereich des Mähwerks erstrecken kann. Beispielsweise sind zwei separate Förderbänder vorgesehen, die in vorteilhafter Weise eine Übergabe von abgemähtem Mähgut aufweisen.

Grundsätzlich kann das Förderband oder dergleichen derart ausgebildet werden, dass dies Mitnahmeelemente aufweist, wobei das zu fördernde Mähgut auf dem Förderband aufliegt bzw. auf dessen Oberseite angeordnet ist. Vor allem alternativ hierzu kann jedoch auch ein Förderband vorgesehen werden, das beispielsweise Rechelemente aufweist, um auf dem Feld angeordnetes bzw. abgelegtes Mähgut quer zur Fahrtrichtung zu befördern bzw. zu rechen. Derartige Band- bzw. Kettenförderer werden z.B. bereits in Bergregionen bevorzugt eingesetzt.

In einer besonderen Weiterbildung der Erfindung ist wenigstens eine Aufnahmeeinheit mit einer um eine Drehachse rotierbaren Aufnahmevorrichtung zum Aufnehmen von abgemähtem Mähgut vorgesehen. Beispielsweise ist die Aufnahmeeinheit als Querfördervorrichtung, insbesondere als Schwadkreisel, Schwadglocke oder dergleichen ausgebildet, z.B. etwa wie eingangs beim erwähnten Stand der Technik. Entsprechende Schwadkreisel bzw. Schwadglocken weisen in vorteilhafter Weise eine vertikal ausgerichtete Drehachse auf, um die sich vorzugsweise Rechelemente oder dergleichen drehen. Es ist auch denkbar, dass die Aufnahmeeinheit eine um eine horizontale Achse drehbare Spirale aufweist, die das abgemähte Mähgut gemäß der Erfindung aufnimmt und in vorteilhafter Weise quer zur Fahrtrichtung fördert.

Vorzugsweise weist die Aufnahmevorrichtung mehrere, im Wesentlichen horizontal um die Drehachse rotierbare Aufnahmezinken bzw. Aufnahmerechen oder dergleichen auf. Beispielsweise ist die Aufnahmevorrichtung als sogenannter "Pick-up" ausgebildet, wie diese bereits in der Landmaschinentechnik vielfach eingesetzt werden. Derartige Pick-up nehmen abgemähtes, auf dem Feld liegendes Mähgut in vorteilhafter Weise mittels der Aufnahmezinken oder dergleichen auf, heben es hierbei an und befördern es beispielsweise zum Aufnahmebereich der Querfördervorrichtung gemäß der Erfindung, die vorzugsweise als Bandförderer ausgebildet ist, auf den das abgemähte Mähgut abgelegt wird.

Gegebenenfalls ist die Querfördervorrichtung als Aufnahmeeinheit ausgebildet. Alternativ hierzu können auch separate Baueinheiten vorgesehen werden, wie beispielweise die Kombination eines Pick-up mit z.B. einem Bandförderer oder dergleichen.

Gerade bei der letzt genannten Variante, bei der zwei separate Einheiten vorgesehen sind, ist es ganz besonders von Vorteil, wenn die Aufnahmeeinheit in Fahrtrichtung betrachtet wenigstens teilweise vor der Querfördervorrichtung angeordnet ist. Hierdurch ist eine besonders einfache Übergabe des aufgenommenen Mähguts zur Querfördervorrichtung bzw. dessen erfindungsgemäßen Aufnahmebereichs realisierbar.

Vorzugsweise erstreckt sich in Fahrtrichtung betrachtet der Förderbereich der Querfördervorrichtung wenigstens über den Mähbereich des Mähwerks und die Aufnahmeeinheit. Hierdurch wird in besonders eleganter Weise eine Förderung des abgemähten Mähguts sowohl vom Bereich neben als auch dem Bereich hinter dem Mähwerk möglich.

In einer vorteilhaften Ausführungsform der Erfindung sind mindestens zwei Mähwerke mit wenigstens teilweise in Fahrtrichtung betrachteten seitlich nebeneinander angeordneten Mähbereichen vorgesehen. Hierdurch wird der gesamte Mähbereich der Mähmaschine relativ einfach vergrößerbar.

Vorteilhafterweise sind wenigstens drei, fünf oder mehr, in der Arbeitsstellung in V-Form angeordnete Mähwerke vorgesehen. Hiermit kann in eleganter Weise der gesamte Mähbereich der Mähmaschine besonders deutlich vergrößert werden.

Bei einer Mähmaschine mit mindestens zwei Mähwerken, die wenigstens teilweise in Fahrtrichtung betrachtet seitlich nebeneinander angeordnet sind, ist von besonderem Vorteil, in Fahrtrichtung betrachtet den Aufnahmebereich der Querfördervorrichtung eines hinteren Mähwerks wenigstens teilweise hinter dem Mähbereich eines vorderen Mähwerks anzuordnen. Mit Hilfe dieser Maßnahme kann beispielsweise das vom vorderen Mähwerk abgemähte Mähgut von der Querfördervorrichtung des hinteren Mähwerks aufgenommen und zur Fahrtrichtung betrachtet quer befördert werden.

Vorzugsweise wird das Mähgut des vorderen Mähwerks von der Querfördervorrichtung aufgenommen und mit dem Mähgut des hinteren Mähwerks zusammengeführt und zumindest teilweise gemeinsam weiter befördert und abgelegt, insbesondere auf einem gemeinsamen Schwad. Hiermit wird es möglich, vor allem bei Mähmaschinen mit mehreren Mähwerken, beispielsweise einen gemeinsamen Schwad oder zwei vorzugsweise an den Außenseiten der Mähmaschine angeordnete Schwade auf dem Feld abzulegen. Beispielweise wird ein Schwad auf der rechten Seite und ein Schwad auf der linken Seite der Mähmaschine abgelegt. Hierdurch kann in vorteilhafter Weise ein Seitenschwad einer ersten Fahrt mit einem Seitenschwad einer zweiten Fahrt zusammengeführt bzw. nebeneinander oder aufeinander angeordnet werden, so dass quasi ein einziger, besonders großer Schwad auf dem Feld entsteht. Dieser hat vorzugsweise die doppelte Breite eines abgelegten Seitenschwads einer einzigen Fahrt.

In vorteilhafter Weise ist ein Ablagebereich der Querfördervorrichtung wenigstens teilweise in Fahrtrichtung betrachtet hinter und/oder seitlich neben dem Mähbereich des Mähwerks angeordnet.

Vorzugsweise ist ein Ablagebereich der Querfördervorrichtung am äußeren Ende der Mähmaschine angeordnet. Hiermit kann in eleganter Weise ein außen angeordneter Seitenschwad gebildet werden, der beispielweise mit einem Seitenschwad einer zweiten Fahrt zusammengeführt werden kann.

Beispielsweise ist die Mähmaschine als eine an eine Zugmaschine anzuhängende Mähmaschine oder als selbstfahrende Mähmaschine ausgebildet. Hiermit kann die Mähmaschine gemäß der Erfindung flexibel an die in der Praxis auftretenden Anforderungen in eleganter Weise angepasst werden.

Ein Ausführungsbeispiel der Erfindung ist in der Zeichnung dargestellt und wird anhand der Figuren nachfolgend näher erläutert.

Im Einzelnen zeigt:
- Figur 1: schematisch eine Mähmaschine gemäß der Erfindung mit vier Mähwerken, wobei die zwei hinteren Mähwerke bzw. deren Querförderer einen Aufnahmebereich gemäß der Erfindung aufweisen,
- Figur 2: schematisch einen perspektivischen Ausschnitt einer Mähmaschine gemäß der Erfindung mit einem Pick-up,
- Figur 3: schematisch eine perspektivische Darstellung eines Mähwerks mit dem Pick-up sowie einem Querförderer gemäß der Erfindung und
- Figur 4: schematisch eine Seitenansicht des Mähwerks mit dem Pick-up sowie dem Querförderer gemäß der Erfindung.

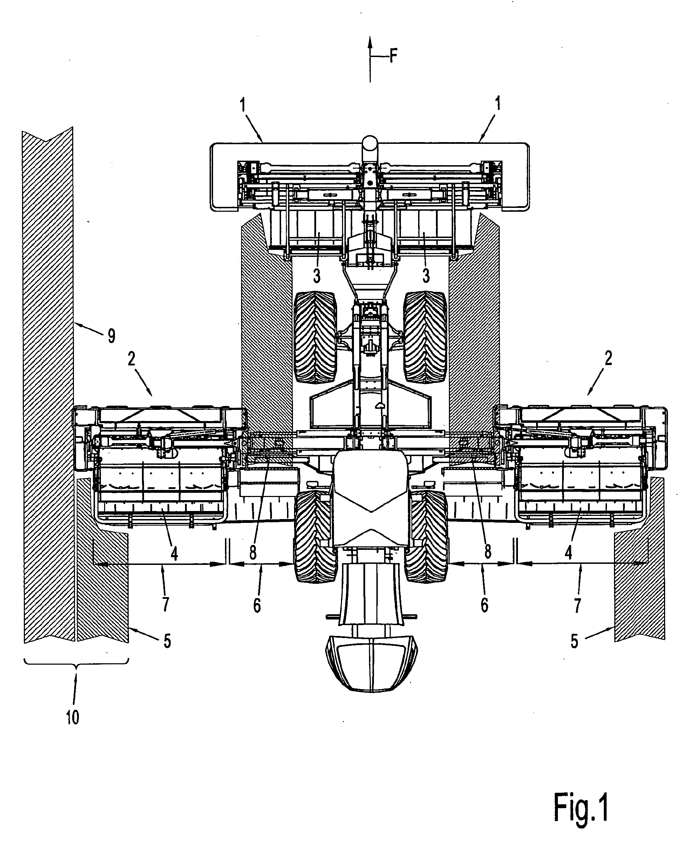

In Figur 1 ist eine Mähmaschine gemäß der Erfindung schematisch in Draufsicht in der Arbeitsstellung dargestellt. Die dargestellte Variante der Mähmaschine weist vier Mähwerke 1, 2 auf. Hierbei sind beispielhaft zwei vordere Mähwerke 1 und zwei hintere Mähwerke 2 vorgesehen, die bevorzugt bereits handelsüblich sind.

Vorne bzw. hinten bezieht sich auf eine Fahrtrichtung F der Mähmaschine, die hier als sogenannter Selbstfahrer ausgebildet ist.

Die vorderen Mähwerke 1 weisen Querförderer 3 auf, die vorzugsweise als Bandförderer ausgebildet sind und das abgemähte Mähgut der Mähwerke 1 im Mähbereich des jeweiligen Mähwerks 1 ablegen. Bei den Mähwerken 1 bzw. 2 handelt es sich vorzugsweise um Mähwerke, die das abgemähte Mähgut wenigstens teilweise vertikal vom Feld abheben, so dass dies beispielsweise auf die Querförderer 3, 4 bzw. auf deren Oberseite abgelegt werden kann. Die Querförderer 3, 4 befördern das abgemähte Mähgut der Mähwerke 1, 2 quer zur Fahrtrichtung F nach außen hin.

Darüber hinaus fördern die Querförderer 4 der hinteren Mähwerke 2 abgemähtes Mähgut der vorderen Mähwerke 1, so dass ein gemeinsamer Schwad 5 am äußeren Rand der Mähmaschine auf jeder Seite abgelegt wird.

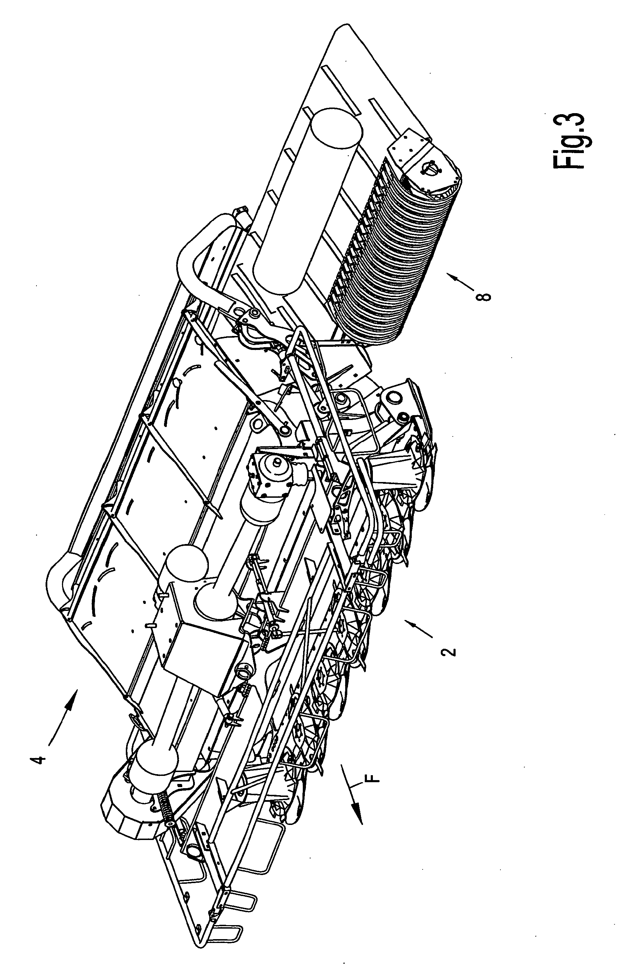

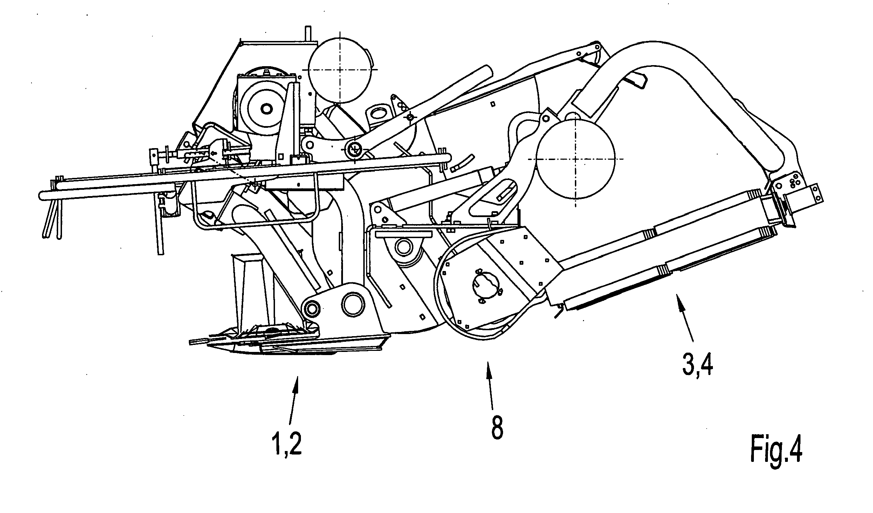

Gemäß der Erfindung weist der Querförderer 4 einen Aufnahmebereich 6 auf, der seitlich neben einem Mähbereich 7 angeordnet ist. Beim dargestellten Ausführungsbeispiel ist eine Aufnahmeeinheit als Pick-up 8 ausgebildet, die das abgemähte und auf dem Feld abgelegte Mähgut der vorderen Mähwerke 1 aufnimmt, anhebt und auf dem Querförderer 4 bzw. dem Förderband des Querförderers 4 ablegt (vgl. auch Figuren 3 und 4) .

Bei den beiden Pick-up 8 kann es sich beispielsweise um handelsübliche Pick-up 8 handeln, so dass eine besonders kostengünstige Ausführungsform realisiert werden kann. Eine Pick-up-Einheit 8 kann beispielsweise eine Arbeitsbreite von knapp 3 Metern aufweisen.

In Figur 1 ist weiterhin ein Schwad 9 abgebildet, der bei einer ersten Fahrt der Mähmaschine abgelegt wurde und bei der dargestellten zweiten Fahrt der Mähmaschine über das Feld gemeinsam mit einem der beiden Schwade 5 einen Gesamtschwad 10 bildet. Der Gesamtschwad 10 weist eine Breite auf, die im Wesentlichen der Summe der beiden Schwade 5 und 9 entspricht.

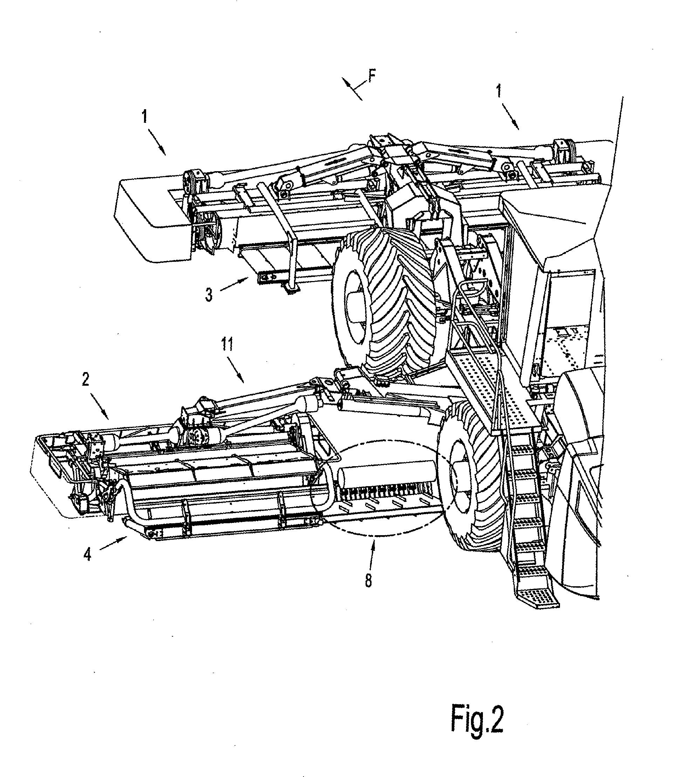

In Figur 2 ist schematisch eine perspektivische Ausschnittsdarstellung der Mähmaschine aus Figur 1 abgebildet, wobei insbesondere die Pick-up-Einheit 8 verdeutlicht wird. Hierin wird ersichtlich, dass es sich um eine Aufnahmeeinheit 8 handelt, die um eine im Wesentlichen horizontal ausgerichtete Drehachse rotierende Aufnahmezinken aufweist, wie sie vielfach in der Landmaschinentechnik bereits üblich sind.

Darüber hinaus wird der Querförderer 4 des hinteren Mähwerks 2 verdeutlicht, der vom Pick-up 8 aufgenommenes Mähgut sowie vom hinteren Mähwerk 2 abgemähtes Mähgut aufnimmt und seitlich nach außen befördert.

Weiterhin wird ersichtlich, dass das hintere Mähwerk 2 an einem Teleskoparm und/oder klappbaren und/oder zusammenfaltbaren Tragarm 11 angeordnet ist, so dass das hintere Mähwerk 2 von der dargestellten Arbeitsstellung in eine Transportstellung verschwenkbar wird. Die vorderen Mähwerke 1 können ebenfalls in bekannter Weise zusammen mit den Querförderern 3 in die Transportstellung zusammengefaltet werden.

### Bezugszeichenliste:

- 1: Mähwerk
- 2: Mähwerk
- 3: Querförderer
- 4: Querförderer
- 5: Schwad
- 6: Bereich
- 7: Bereich
- 8: Pick-up
- 9: Schwad
- 10: Schwad
- 11: Arm

- F: Fahrtrichtung

## Patentansprüche

1. Mähmaschine mit wenigstens einem Mähwerk (1, 2) mit einem quer zur Fahrtrichtung (F) ausgebildeten Mähbereich (7), wobei wenigstens eine Querfördervorrichtung (3, 4) zum wenigstens teilweise quer zur Fahrtrichtung (F) gerichteten Fördern von abgemähtem Mähgut vorgesehen ist und wobei die Querfördervorrichtung (3, 4) einen Aufnahmebereich (6) zum Aufnehmen von abgemähtem Mähgut aufweist, **dadurch gekennzeichnet, dass** der Aufnahmebereich (6) der Querfördervorrichtung (4) wenigstens teilweise, quer zur Fahrtrichtung (F) betrachtet, seitlich neben dem Mähbereich (7) des Mähwerks (2) angeordnet ist.

2. Mähmaschine nach Anspruch 1, **dadurch gekennzeichnet, dass** die Querfördervorrichtung (3, 4) in Arbeitsstellung wenigstens teilweise hinter dem Mähbereich (7) des Mähwerks (1, 2) angeordnet ist.

3. Mähmaschine nach einem der vorgenannten Ansprüche, **dadurch gekennzeichnet, dass** die Querfördervorrichtung (3, 4) in Arbeitsstellung wenigstens teilweise hinter und quer zur Fahrtrichtung (F) betrachtet, seitlich neben dem Mähbereich (7) des Mähwerks (1, 2) angeordnet ist.

4. Mähmaschine nach einem der vorgenannten Ansprüche, **dadurch gekennzeichnet, dass** die Querfördervorrichtung (3, 4) wenigstens eine Bandfördereinheit (3, 4) mit einem Förderband umfasst.

5. Mähmaschine nach einem der vorgenannten Ansprüche, **dadurch gekennzeichnet, dass** wenigstens eine Aufnahmeeinheit (8) mit einer um eine Drehachse rotierbaren Aufnahmevorrichtung (8) zum Aufnehmen von abgemähtem Mähgut vorgesehen ist.

6. Mähmaschine nach einem der vorgenannten Ansprüche, **dadurch gekennzeichnet, dass** die Aufnahmeeinheit (8) in Fahrtrichtung (F) betrachtet wenigstens teilweise vor der Querfördervorrichtung (4) angeordnet ist.

7. Mähmaschine nach einem der vorgenannten Ansprüche, **dadurch gekennzeichnet, dass** in Fahrtrichtung (F) betrachtet der Förderbereich (6, 7) der Querfördervorrichtung (3, 4) sich wenigstens über den Mähbereich (7) des Mähwerks (3, 4) und die Aufnahmeeinheit (8) erstreckt.

8. Mähmaschine nach einem der vorgenannten Ansprüche, **dadurch gekennzeichnet, dass** mindestens zwei Mähwerke (1, 2) mit wenigstens teilweise in Fahrtrichtung (F) betrachteten seitlich nebeneinander angeordneten Mähbereichen (7) vorgesehen sind.

9. Mähmaschine nach einem der vorgenannten Ansprüche, **dadurch gekennzeichnet, dass** wenigstens drei, in der Arbeitsstellung in V-Form angeordnete Mähwerke (1, 2) vorgesehen sind.

10. Mähmaschine nach einem der vorgenannten Ansprüche, **dadurch gekennzeichnet, dass** in Fahrtrichtung (F) betrachtet der Aufnahmebereich (6) der Querfördervorrichtung (4) eines hinteren Mähwerks (2) wenigstens teilweise hinter dem Mähbereich eines vorderen Mähwerks (1) angeordnet ist.

11. Mähmaschine nach einem der vorgenannten Ansprüche, **dadurch gekennzeichnet, dass** ein Ablagebereich (5, 9) der Querfördervorrichtung (4) am äußeren Ende der Mähmaschine angeordnet ist.

12. Mähmaschine nach einem der vorgenannten Ansprüche, **dadurch gekennzeichnet, dass** die Mähmaschine als eine an eine Zugmaschine anzuhängende Mähmaschine ausgebildet ist.

13. Mähmaschine nach einem der vorgenannten Ansprüche, **dadurch gekennzeichnet, dass** die Mähmaschine als selbstfahrende Mähmaschine ausgebildet ist.
